# EUROPÄISCHE PATENTSCHRIFT

(11) **EP 0 478 947 B1**
(45) Veröffentlichungstag und Bekanntmachung des Hinweises auf die Patenterteilung: **14.12.1994**
(21) Anmeldenummer: 91114280.0
(22) Anmeldetag: 26.08.1991
(51) Int. Cl.: F16D 55/40, F16D 65/54

(54) **Scheibenbremse, insbesondere Lamellenscheibenbremse für Schienenfahrzeuge**
Disc brake, particularly multiple disc brake for rail vehicles
Frein à disque, notamment frein à disque multiples pour véhicules ferroviaires

(30) Priorität: 04.10.1990 DE 4031335
(43) Veröffentlichungstag der Anmeldung: 08.04.1992
(73) Patentinhaber: KNORR-BREMSE AG, 80710 München (DE)
(72) Erfinder: Wirth, Xaver, Dr., W-8045 Ismaning (DE)

(56) Entgegenhaltungen:
- DE-A- 1 804 033
- DE-A- 2 840 300

## Beschreibung

Die Erfindung betrifft eine Scheibenbremse nach dem Gattungsbegriff des Patentanspruches 1.

Bei der Projektierung von Lamellenbremsscheiben aus Kohlenstoff (CFC-Material) ist es erforderlich, bei gelöster Bremse definierte Lüftspalte zwischen den Reibpartnern (Rotoren und Statoren bzw. Bremsbelägen) einzuhalten, wenn diese in Schienenfahrzeugen hoher Geschwindigkeit eingesetzt werden oder wenn es sich z.B. um Bremsanlagen handelt, bei welchen mangels dynamischer Stöße ein vollständiges Lösen der Bremspartner im allgemeinen verhindert ist. Insbesondere bei Einsatz in Schienenfahrzeugen ist es unbedingt notwendig, einen definierten Lüftspalt einzuhalten, da der Verschleiß bei kraftlosem Schleifen der CFC-Partner unverhältnismäßig hoch ist. Die Rotoren und Statoren müssen deshalb axial verschieblich so gelagert sein, daß sie nach dem Lösen berührungsfrei geführt sind.

Infolge hoher dynamischer Belastungen beim Einsatz in Schienenfahrzeugen ist eine spielbehaftete, lose Lagerung des Rotors auf der Achse nicht sinnvoll, da mit einem Ausschlagen und einem unverhältnismäßigen hohen Verschleiß zu rechnen ist. Infolge unterschiedlicher Wärmeausdehnungskoeffizienten und großer Temperaturdifferenzen zwischen den Reibelementen und den übrigen Teilen der Bremse (Rotorträger, Nabe etc.) sind außerdem Verformungen, Brüche oder Verklemmungen möglich, welche es zu vermeiden gilt.

Bei einer bekannten Reibungsbremse (DE-A 28 40 300) sind auf Bolzen angeordnete Spielnachsteller vorgesehen, welche am Außenumfang der Bremsscheibenanordung statorfest ausgebildet sind. In ihrer Baulage, welche in Radialrichtung sehr stark austrägt, sind die Bestandteile der Spielnachsteller und die sie tragenden Bolzen in hohem Maße thermischer Belastung ausgesetzt, da die Abstrahlung der Wärme von den Stator- und Rotorelementen bevorzugt radial gerichtet ist. Die Genauigkeit der Spielnachstellung kann hierdurch in Frage gestellt sein; für den Einsatz in sehr niedrig bauenden, teilweise gekapselten Lamellenbremsscheiben aus Kohlenstoff (CFC-Material) sind derartige Nachstellerkonstruktionen infolgedessen nicht geeignet.

Davon ausgehend besteht die Aufgabe der Erfindung darin, eine Scheibenbremse der gattungsgemäßen Art so auszugestalten, daß ungeachtet baulich beengter Verhältnisse und insbesondere angesichts hoher Temperaturen mit einfachen Mitteln ein definiertes Lüftspiel zwischen den Reibungspartnern, insbesondere aus CFC-Material bestehenden Stator- und Rotorelementen erreicht werden kann, wenn die Bremse gelöst wird. Die definierte Einstellung des Lüftspiels soll unabhängig vom Verschleiß der Reibungspartner und deren Nachstellung ermöglicht sein.

Zur Lösung dieser Aufgabe dienen die Merkmale nach dem Kennzeichnungsteil des Patentanspruches 1.

Die Ausbildung der Rotortragbolzen am in unmittelbarer Nähe der Welle diese umgebenden Tragring gestattet eine sehr kompakte Ausbildung der Scheibenbremskonstruktion. Die Spielnachsteller befinden sich jeweils im Bereich der Stirnflächen der Scheibenbremse, sie sind also gegenüber starker Wärmeabstrahlung der Stator- und Rotorelemente weitgehend geschützt, insbesondere bei Verwendung eines thermischen Schutzbelages für den Tragring. Das Ausmaß der Spielnachstellung und somit des Verschleißzustandes der Reibpartner ist optisch wahrnehmbar, da sich die Rotortragbolzen durch den Tragring und stirnseitig durch die Spielnachsteller erstrecken.

Mit Hilfe der Rotorlagerung ist eine langhubig vorgespannte, flanschähnliche Befestigung des Rotorelements bzw. eines Bremsscheibenelements vergleichbarer Wirkungsweise ermöglicht. Die Folge ist ein geringer Verschleiß der Rotorlagerung bei dynamischer Belastung. Die aus einem Tellerfederpaket oder aus einer Schraubenfeder bestehende Federanordnung vermittelt immer eine definierte axiale Rückstellung des Rotorelements nach dem Lösen der Bremse. Der Aufbau ist auch kostengünstig, da der Rotorträger, d.h. die am Umfang verteilt angeordneten Rotortragbolzen im Steiler integriert sind. Die Befestigung der Rotortragbolzen am Rotorflansch unter Führung durch den Tragring vermittelt eine axiale "Stoßfestigkeit", da eine fliehkraftabhängige Bolzenreibung der Rotortragbolzen im Tragring vorliegt.

Bei Verwendung eines durch den Rotortragbolzen sich erstreckenden Spannbolzens ist ein Nachziehen der Klemmverbindung zwischen Rotortragbolzen und Rotorflansch über die am Ende das Spannbolzens befindliche Mutter auf einfache Weise möglich.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
- Fig.1: ist eine Teilschnittansicht der Scheibenbremse in ihrer Ausgestaltung als Lamellenscheibenbremse für Schienenfahrzeuge;
- Fig.2: ist eine der Fig.1 vergleichbare Schnittansicht unter Darstellung einer weiteren Ausführungsform nach der Erfindung;
- Fig.3: ist eine Einzelschnittansicht unter Darstellung der Führung des Rotorelements an einem der Rotortragbolzen gemäß einer Weiterbildung der Erfindung; und
- Fig.4: ist eine weitere Teilschnittansicht unter Darstellung einer Scheibenbremse bei Einbau in einem schwimmend gelagerten Bremssattel, wobei die Bremsscheibe mit Hilfe der Rotorlagerung und des Stellers nach der Erfindung auf der Welle geführt ist.

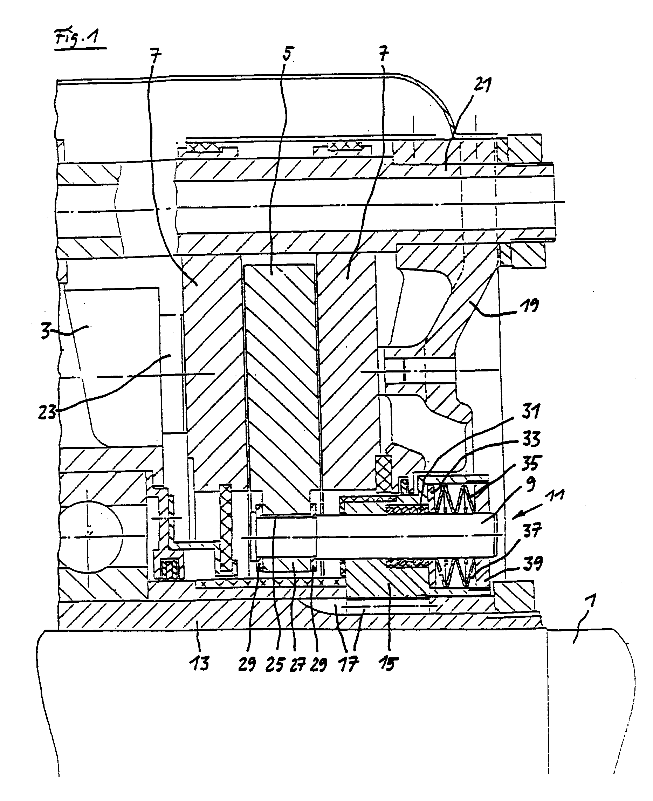

In der Schnittansicht nach Fig.1 ist die Welle 1 eines Schienenfahrzeugs dargestellt, auf welcher die Lamellen-Scheibenbremse angeordnet ist. Es handelt sich hierbei z.B. um eine Lamellenscheibenbremse von Zwillingsanordnung, bei welcher zu beiden Seiten einer mittig angeordneten Zuspanneinrichtung 3 Rotorelemente 5 und Statorelemente 7 vorgesehen sind. Die Rotorelemente 5, von welchen in Fig.1 eines dargestellt ist, sind mit Hilfe von Rotortragbolzen 9 und den Rotortragbolzen zugeordneten Spielstellern 11 mit der Welle 1 verbunden. Das Rotorelement 5 ist auf mindestens drei am Umfang liegenden, achsparallelen Rotortragbolzen 9 gelagert, wobei vorzugsweise gleichfalls wenigstens drei Spielsteller 11 vorgesehen sind. Die Rotortragbolzen 9 sind in einem mit der Nabe 13 umlaufenden Tragring 15 axial verschieblich geführt. Der Tragring 15 kann z.B. mittels einer Keilanordnung 17 mit der Nabe 13 verbunden sein, wobei die Nabe ihrerseits mittels Preßsitz auf der Welle 1 befestigt ist. Drehungen der Welle 1 werden demnach über die Nabe 13 und den Tragring 15 bzw. die Rotortragbolzen 9 auf das in der Zeichnung dargestellte Rotorelement 5 übertragen. Die Statorelemente 7 sind zu beiden Seiten des Rotorelements 5 parallel ausgerichtet; die Statorelemente sind drehfest gehalten, sie sind jedoch in gleicher Weise wie das Rotorelement axial verschieblich geführt, wobei sich das in der Zeichnung rechts befindlich dargestellte Statorelement an einem Tragring 19 eines Statorträgers 21 abstützt. Das in der Zeichnung links befindlich dargestellte Statorelement 7 ist von einem Druckstück 23 der z.B. als Spreizzylinder ausgebildeten Zuspanneinrichtung 3 beaufschlagbar. Die Statorelemente sind am Statorträger 21 axial beweglich geführt, wobei die Statorträger 21, von welchen mehrere am Umfang vorgesehen sind, Augen oder Halbaugen der Statorelemente 7 durchsetzen, derart, daß eine Drehsicherung für die Statorelemente bei gleichzeitig axialer Beweglichkeit gegeben ist. Bei Betätigung der Zuspanneinrichtung wirkt das Druckstück 23 auf das links befindliche Statorelement ein, welches sich zum Zwecke des Abbremsens des Rotorelements an dieses anlegt, wonach das Rotorelement seinerseits an das rechts befindliche Statorelement angedrückt wird. Während das Spiel zwischen den Rotortragbolzen 9 und den Führungsbohrungen des Tragrings 15 klein ist, herrscht zwischen der Bohrung 25 des Rotorelements 5 und dem Außenumfang der Rotortragbolzen 9 in radialer Richtung einseitig so viel Spiel (exzentrischer Bohrungsversatz), daß die während oder nach einer Bremsung thermisch bedingte Radialverschiebung bzw.

Durchmesservergrößerung der Rotortragbolzen zwangsfrei ausgeglichen werden kann. Um unzulässig hohen Verschleiß in den Bohrungen 25 des Rotorelements 5 infolge dynamischer Belastung zu verhindern, ist der Rotorflansch 27 durch axial vorgespannte Ringe 29 geklemmt.

In die Rotorlagerung ist der sogenannte Spielsteller 11 integriert. Gemäß Darstellung ist auf den Rotortragbolzen 9 ein Klemmkörper z.B. in Form einer Klemmfeder 31 aufgepreßt; die Klemmfeder 31 stützt sich mit einem Ende an einem Ring 33 ab, welcher seinerseits als Abstützung für das in der Zeichnung linksseitige Ende eines Tellerfederpakets 35 dient. Das in einer Ausnehmung 37 des Tragrings 15 am Außenumfang des Rotortragbolzens 9 angeordnete Tellerfederpaket stützt sich am entgegengesetzten Ende an einem weiteren Ring 39 ab, welcher mit seinem Außenumfang am Tragring 15 in einer den Rotortragbolzen 9 umgebenden Lage fixiert ist. Bei axialer Verschiebung des Rotortragbolzens 9 infolge Zuspannung mittels des Druckstückes 23 sorgt die Klemmfeder 31 für eine Einfederung des axial vorgespannten Tellerfederpaketes 35. Hierbei nimmt der Rotortragbolzen mittels der Klemmfeder 31 den Ring 33 nach rechts gerichtet mit und drückt infolgedessen das Tellerfederpaket 35 gegenüber dem Ring 39 zusammen. Nach dem Lösevorgang der Bremse, bei dem das linksseitig dargestellte Statorelement 7 gleichzeitig mit dem Druckstück 23 um ein definiertes Maß zurückfährt, kann sich das Tellerfederpaket 35 bis zum in der Zeichnung dargestellten Anschlag entspannen. Durch die Reibungskraft zwischen der Klemmfeder 31 und dem Rotortragbolzen 9 wird dieser einschließlich Rotorelement 5 mitgenommen. Der Hub der Federn des Tellerfedernpaketes ist durch Zwischenscheiben 41 so einstellbar, daß das sogenannten Lüftspiel beidseitig des Rotorelements in etwa gleich groß ist.

Die axiale "Stoßsicherheit" des Rotor- bzw. Spielstellers kann über die Federkraft der Tellerfedern, die Klemmkraft der Klemmfeder 31 und die Anzahl der Rotortragbolzen am Umfang des Rotorelements entsprechend den Erfodernissen angepaßt werden.

Der während des Bremsvorganges auftretende Verschleiß an beiden Seiten des Rotorelements führt bei Bremsbetätigung zu einer Verschiebung desselben. Diese Verschiebung wird ermöglicht durch das Gleiten des Rotortragbolzens 9 in der Klemmfeder 31, nachdem zuvor das Tellerfederpaket 35 zusammengedrückt ist. Nach dem Lösen steht das Rotorelement, axial um das Verschleißmaß verschoben, wieder in seiner definierten Position.

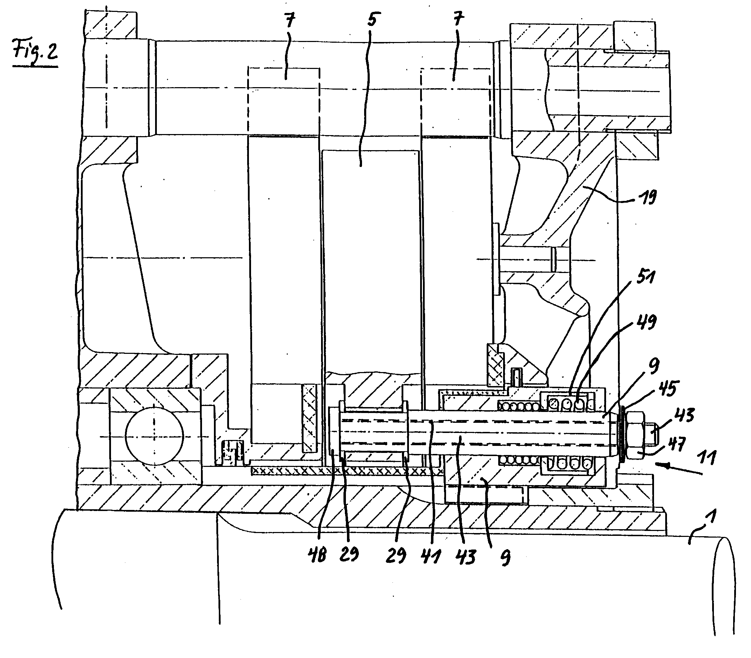

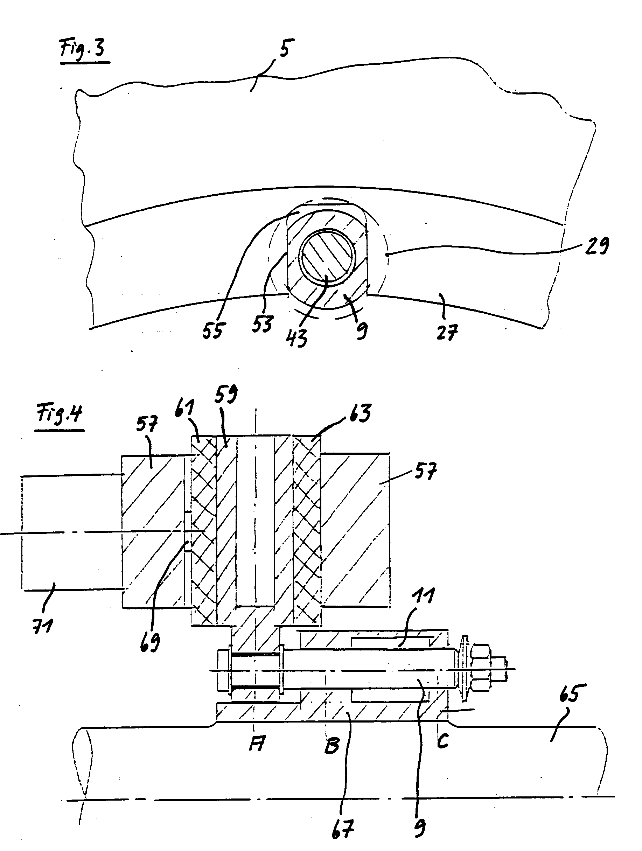

In Fig.2 der Zeichnung ist eine weitere Ausführungsform der erfindungsgemäßen Lamellenscheibenbremse dargestellt. Der Rotortragbolzen 9 ist hohl gebohrt; durch die Bohrung 41 greift ein Spannbolzen 43, welcher über Tellerfedern 45 mittels einer Mutter 47 und einem Kopfteil 48 gegenüber dem Rotortragbolzen 9 axial verspannt ist. Zwischen den Ringen 29 herrscht somit eine definierte Klemmkraft, die weitgehend unabhängig von der lokalen Erwärmung oder vom Verschleiß zwischen den Ringen und dem Rotorflansch 27 ist. Gegenüber der Ausführungsform nach Fig.1 ist das Tellerfederpaket 35 durch eine Schraubenfeder 49 ersetzt, welche innerhalb einer Buchse 51 geführt ist. Der zylindrische Teil des Rotortragbolzens 9 (Fig.2) im Bereich zwischen den Ringen 29 ist gemäß Fig.3 durch eine radiale Gleitführung ersetzt, d.h. der Rotortragbolzen 9 ist mittels paralleler Seitenflächen 53 in einer im Rotorflansch 27 ausgebildeten U-förmigen Nut 55 radial verschieblich geführt.

Gemäß einer weiteren Ausgestaltung der Lamellenscheibenbremse sind am Umfang des Rotorelements abwechselnd Rotortragbolzen mit Spielsteller und Rotortragbolzen ohne Spielsteller vorgesehen. Sinnvollerweise sind jedoch mindestens drei Spielsteller bzw. Nachsteller gleichmäßig am Umfang verteilt vorgesehen.

Der der Erfindung eigene Gedanke ist auch bei herkömmlichen Bremssattelkonstruktionen verwendbar. Hierbei kann den z.B. bei Schwimmsatteln in Kombination mit schnell drehenden Bremsscheiben (z.B. Getriebebremsscheiben) auftretenden Problemen wie folgt gerecht werden:
Bei Schwimmsattelkonstruktionen wird der Bremsbelag der Kolbenseite, also der den Betätigungskolben führenden Seite, durch den Kolbenrückhub kraft- bzw. berührungsfrei. Der gegenüberliegende Belag verbleibt jedoch mit einer geringen Restkraft an der Bremsscheibe, falls nicht dynamische Stöße den axial verschieblichen Schwimmsattel freischlagen. Mit einem derartigen Freischlagen ist an Achsscheibenbremsen zu rechnen. Bei Getriebebremsen fehlen entsprechende dynamische Beschleunigungen. Die Folge ist einseitig erhöhter Belagverschleiß. Eine erfindungsgemäße Bremsscheibenlagerung mit integriertem Steller bietet hier eine Abhilfemaßnahme. Gemäß Fig.4 ist einer in einem schwimmend geführten Bremssattel 57 befindlichen Bremsscheibe 59 auf beiden Seiten jeweils ein Bremsbelag 61 und 63 zugeordnet. Die Bremsscheibe ist mittels des erfindungsgemäßen Spielstellers 11, von welchen mehrere am Umfang verteilt angeordnet sind, an einer auf einer Welle 65 befestigten Nabe 67 angeordnet. Auf den in der Zeichnung linksseitig wiedergegebenen Bremsbelag 61 wirkt ein Druckstück 69 ein, welches mit einem Betätigungszylinder 71 verbunden ist. Bei Druckbeaufschlagung durch den Betätigungszylinder 71 wird das Druckstück 69 an den Bremsbelag 61 und dieser an die Bremsscheibe angepreßt; der rechtsseitig wiedergegebene Bremsbelag 63 wird als Folge der Reaktionskraft des schwimmend geführten Bremssattels 57 seinerseits an die Bremsscheibe angedrückt. Beim Lösen der Bremse kehrt die Bremsscheibe unter der Wirkung des Spielstellers 11 in vorstehend erläuterter Weise in eine definierte Ausgangsposition zurück, in welcher sie sich sowohl vom Bremsbelag 61 als auch vom Bremsbelag 63 gelöst hat.

Gemäß einer alternativen Konstruktion kann die Lagerstelle der Bremsscheibe auf der Nabe symmetrisch ausgeführt sein, d.h. die Lagerstelle A gemäß Fig.4 liegt zwischen den Punkten B und C. Der Spielsteller ist dann auf einer Seite ausgerichtet.

### Bezugszeichenliste

- 1: Welle
- 3: Zuspanneinrichtung
- 5: Rotorelement
- 7: Statorelement
- 9: Rotortragbolzen
- 11: Spielsteller
- 13: Nabe
- 15: Tragring
- 17: Keilanordnung
- 19: Tragring
- 21: Statorträger
- 23: Druckstück
- 25: Bohrung
- 27: Rotorflansch
- 29: Ring
- 31: Klemmfeder
- 33: Ring
- 35: Tellerfederpaket
- 37: Ausnehmung
- 39: Ring
- 41: Bohrung
- 43: Spannbolzen
- 45: Tellerfeder
- 47: Mutter
- 48: Kopfteil
- 49: Schraubenfeder
- 51: Buchse
- 53: Seitenfläche
- 55: Nut
- 57: Bremssattel
- 59: Bremsscheibe
- 61: Bremsbelag
- 63: Bremsbelag
- 65: Welle
- 67: Nabe
- 69: Druckstück
- 71: Betätigungszylinder

## Patentansprüche

1. Scheibenbremse mit Spielnachstellung, insbesondere Lamellenscheibenbremse für Schienenfahrzeuge, mit wenigstens einem mit einer abzubremsenden Welle (1) verbundenen, bei Bremsbetätigung beidseitig gegenüber andrückbaren Statorelementen (7) bzw. Bremsbelägen wirkenden Rotorelement (5), gekennzeichnet durch folgende Merkmale:
das Rotorelement (5) ist mittels mehrerer am Umfang verteilt angeordneter Rotortragbolzen (9) an einem mit der Welle (1) verbundenen Tragring (15) gehaltert wobei die Rotortragbolzen (9) zur Spielnachstellung dienende Spielnachsteller (11) im Tragring (15) axial beweglich durchsetzen.

2. Scheibenbremse nach Anspruch 1, gekennzeichnet durch folgende Merkmale:
a) innerhalb der die Rotortragbolzen (9) aufnehmenden Bohrungen des Tragrings (15) ist jeweils am Außenumfang der Rotortragbolzen unter Klemmsitz eine Klemmfeder (31) geführt;
b) in Bremsbetätigungsrichtung grenzt jeweils an die Klemmfeder (31) eine durch die Klemmfeder bei axialer Verschiebung des Rotortragbolzens zusammendrückbare Federanordnung (Tellerfederpaket 35; Schraubenfeder (49) an; und
c) jeder der Rotortragbolzen (9) ist innerhalb des Tragrings (15) in Bremsbetätigungsrichtung und in Löserichtung axial beweglich, derart, daß er nach Zusammendrücken der Federanordnung bei Überwindung der Klemmkraft der Klemmfeder um ein dem Verschleiß entsprechendes Maß relativ zur Klemmfeder (31) verschieblich ist.

3. Scheibenbremse nach Anspruch 1 oder 2, dadurch gekennzeichnet, daß die Federanordnung jeweils aus einem den Rotortragbolzen umgebenden Tellerfederpaket (35) besteht, welches innerhalb einer Ausnehmung (37) des Rings geführt und durch die bei Bremsbetätigung mit dem Rotortragbolzen axial verschiebbare Klemmfeder (31) zusammendrückbar ist.

4. Scheibenbremse nach Anspruch 3, dadurch gekennzeichnet, daß sich das Tellerfederpaket (35) in seinen axialen Abmessungen einerseits an einem axial beweglichen, der Klemmfeder (31) zugewandten Ring (33) und andererseits an einem mit dem Tragring (15) verbundenen Ring (39) abstützt, derart, daß das Tellerfederpaket bei Axialbewegung des Rotortragbolzens durch den zwischengeschalteten Ring (33) zusammendrückbar ist.

5. Scheibenbremse nach einem der vorangehenden Ansprüche, dadurch gekennzeichnet, daß die Federanordnung aus einer Schraubenfeder (49) besteht.

6. Scheibenbremse nach einem der vorangehenden Ansprüche gekennzeichnet durch folgende Merkmale:
a) die Rotortragbolzen (9) erstrecken sich mit einem Ende jeweils durch den am Innenumfang des Rotorelements (5) befindlichen Rotorflansch (27); und
b) der Rotorflansch ist mit Hilfe von an seinen Stirnseiten die Rotortragbolzen umgebenden Ringen (29) gegenüber am Außenumfang der Rotortragbolzen angeordneten Schultern axial verspannt.

7. Scheibenbremse nach einem der vorangehenden Ansprüche, dadurch gekennzeichnet, daß am Innenumfang des Rotorflansches (27) U-förmige, radial nach innen gerichtet offene Nuten (55) ausgebildet sind, und daß die Enden der Rotortragbolzen mit ebenen Seitenflächen (53) in den Nuten radial verschieblich geführt sind.

8. Scheibenbremse nach einem der vorangehenden Ansprüche, gekennzeichnet durch folgende Merkmale:
a) die Rotortragbolzen sind in Axialrichtung jeweils von einer Bohrung (41) durchsetzt;
b) in der Bohrung (41) erstreckt sich ein Spannbolzen (43), welcher an dem den Rotorflansch durchsetzenden Ende außerhalb der Bohrung (41) einen Kopfteil (48) trägt, wobei der Kopfteil an den stirnseitigen Ring (29) am Rotorflansch angelegt ist; und
c) das entgegengesetzte Ende des Spannbolzens (43) trägt außerhalb des Rotortragbolzens eine Mutter (47), welche unter Zwischenschaltung einer Tellerfeder (45) gegenüber dem stirnseitigen Ende des Rotortragbolzens verspannbar ist.

## Claims

1. Disc brake with play adjustment, in particular, multiple disc brake for rail vehicles, with one or more rotor elements (5) which, when the brake is applied, press against stator elements (7) or brake linings on either side and are connected to a shaft (1) which is to be braked, characterized by the following features:
the rotor element (5) is mounted, by means of a number of rotor support pins (9) distributed on the periphery, on a support ring (15) which is connected to the shaft (1), the axially movable rotor support pins (9) passing through play adjusters (11) in the support ring (15) which serve to adjust the play.

2. Disc brake according to Claim 1, characterized by the following features :
a) a force-fitted friction spring (31) is guided around the outer periphery of each of the rotor support pins within the bores of the support ring (15) which accommodate the rotor support pins (9);
b) a spring assembly (cup spring stack (35); helical spring 49)), which is compressible by the friction spring when the rotor support pin is axially displaced, adjoins each friction spring (31) in the direction of application of the brake; and
c) each of the rotor support pins (9) is axially movable within the support ring (15) in both the direction of application and the direction of release of the brake, in such a way that, following compression of the spring assembly by overcoming of the clamping force of the friction spring, it is displaceable relative to the friction spring (31) by an amount which corresponds to the wear.

3. Disc brake according to either of Claims 1 or 2, characterized in that each spring assembly comprises a cup spring stack (35), surrounding the rotor support pin, which is located within a recess (37) of the ring and is compressible by the friction spring (31) which is axially displaceable with the rotor support pin when the brake is applied.

4. Disc brake according to Claim 3, characterized in that the cup spring stack (35) is axially supported on both an axially movable ring (33) facing the friction spring (31) and a ring (39) connected to the support ring (15), so that, with axial movement of the rotor support pin, the cup spring stack is compressible by the intermediate ring (33).

5. Disc brake according to any one of the preceding Claims, characterized in that the spring assembly comprises a helical spring (49).

6. Disc brake according to any one of the preceding Claims, characterized by the following features :
a) one end of each of the rotor support pins (9) passes through the rotor flange (27) located on the inner periphery of the rotor element (5); and
b) the rotor flange is axially tensioned against shoulders located on the outer periphery of the rotor support pins by means of rings (29) which pass around the rotor support pins on their front faces.

7. Disc brake according to any one of the preceding Claims, characterized in that on the inner periphery of the rotor flange (27) there are formed U-shaped open grooves (54), oriented radially inwards, and that the ends of the rotor support pins have flat lateral faces (53) and are located, so as to be radially displaceable, within the grooves.

8. Disc brake according to any one of the preceding Claims, characterized by the following features :
a) a bore (41) passes through each of the rotor support pins, in the axial direction;
b) a tensioning pin (43) extends within the bore (41), the end of the tensioning pin which passes through the rotor flange supporting a head (48), outside the bore (41), which bears on the end ring (29) on the rotor flange, and
c) the opposite end of the tensioning pin (43) supports a nut (47), on the outside of the rotor support pin, which is capable of being tensioned against the outside face end of the rotor support pin, with an intermediate cup spring (45).

## Revendications

1. Frein à disque à rattrapage de jeu, notamment frein à disques multiples pour véhicule sur rails, comportant au moins un élément de rotor (5), qui est relié à un arbre (1) devant être freiné et, lors de l'actionnement du frein, agit des deux côtés par l'intermédiaire d'éléments statoriques (7) ou de garnitures de frein, pouvant être serrés, caractérisé par les particularités suivantes: l'élément de rotor (5) est retenu au moyen de plusieurs broches (9) de support du rotor réparties sur la périphérie, sur une bague de support (15) reliée à l'arbre (1), les broches (9) de support du rotor traversant, tout en étant déplaçables axialement, des dispositifs de rattrapage de jeu (11) utilisés pour le rattrapage de jeu et disposés dans la bague de support (15).

2. Frein à disque suivant la revendication 1, caractérisé par les particularités suivantes :
a) un ressort de serrage (31) est disposé respectivement, selon un ajustement serré, sur le pourtour extérieur de broches de support de rotor, à l'intérieur des perçages de la bague de support (15), qui logent les broches (9) de support du rotor;
b) un dispositif à ressort (paquet de ressorts 35; ressort hélicoïdal 49), qui peut être comprimé par le ressort de serrage dans le cas d'un déplacement axial de la broche de support du rotor, est contigu au ressort de serrage (31), dans la direction d'actionnement du frein; et
c) chaque broche (9) de support du rotor est déplaçable axialement à l'intérieur de la bague de support (15) dans la direction d'actionnement du frein et dans la direction de desserrage du frein de telle sorte qu'après compression du dispositif à ressort, lorsque la force de serrage du ressort de serrage est vaincue, ladite broche est déplaçable, sur une distance qui correspond à l'usure, par rapport au ressort de serrage (31).

3. Frein à disque suivant la revendication 1 ou 2, caractérisé par le fait que le dispositif à ressort est constitué par un paquet de ressorts Belleville (35), qui entoure la broche de support du rotor et qui s'étend à l'intérieur d'un logement (37) de la bague et peut être comprimé par le ressort de serrage (31) qui est déplaçable axialement avec la broche de support du rotor lors de l'actionnement du frein.

4. Frein à disque suivant la revendication 3, caractérisé par le fait que le paquet de ressorts Belleville (35) prend appui, au niveau de ses extrémités axiales, d'une part, contre une bague déplaçable axialement (33), qui est tournée vers le ressort de serrage (31), et, d'autre part, contre une bague (39), qui est reliée à la bague de support (15), de telle sorte que le paquet de ressorts Belleville peut être comprimé par la bague intercalée (33), lors du déplacement axial de la broche de support du rotor.

5. Frein à disque suivant l'une des revendications précédentes, caractérisé par le fait que le dispositif à ressort est constitué par un ressort hélicoïdal (49).

6. Frein à disque suivant l'une des revendications précédentes, caractérisé par les particularités suivantes :
a) les broches (9) de support du rotor traversent, par une extrémité, la bride (27) du rotor qui est située sur le pourtour intérieur de l'élément de rotor (5); et
b) la bride du rotor est serrée axialement, à l'aide de bagues (29), qui entourent les broches de support du rotor, au niveau de leurs faces frontales, par rapport à des épaulements situés sur la périphérie extérieure des broches de support du rotor.

7. Frein à disque suivant l'une des revendications précédentes, caractérisé par le fait que des rainures ouvertes en forme de U (55), qui sont dirigées radialement vers l'intérieur, sont ménagées dans la périphérie intérieure de la bride (27) du rotor et que les extrémités des broches de support du rotor sont guidées de manière à être déplaçables radialement, au moyen de surfaces latérales planes (53), dans les rainures.

8. Frein à disque suivant l'une des revendications précédentes, caractérisé par les particularités suivantes :
a) les broches de support du rotor sont traversées, dans la direction axiale, respectivement par un perçage (41);
b) dans le perçage (41) s'étend un boulon de tension (43), qui porte une partie de tête (48) sur son extrémité, qui traverse la bride du rotor, à l'extérieur du perçage (41), la partie de tête s'appliquant contre la bague au niveau de la bague frontale (29) sur la bride de rotor; et
c) l'extrémité opposée du boulon de tension (43) porte, à l'extérieur de la broche de support du rotor, un écrou (47), qui peut être serré, moyennant l'interposition d'un ressort Belleville (45), contre l'extrémité frontale de la broche de support du rotor.
